(19) Europäisches Patentamt
European Patent Office
Office européen des brevets

(11) Veröffentlichungsnummer : **0 162 938**
**B1**

(12) # EUROPÄISCHE PATENTSCHRIFT

(45) Veröffentlichungstag der Patentschrift : **02.11.89**

(21) Anmeldenummer : **84106081.7**

(22) Anmeldetag : **28.05.84**

(51) Int. Cl.$^4$ : **C 08 G 18/08**, B 01 J 13/02, B 41 M 5/00

(54) **Verwendung von Isocyanat- oder Isothiocyanatpolymerisaten zur Herstellung von Mikrokapseln für chemische Reaktionsdurchschreibepapiere.**

(43) Veröffentlichungstag der Anmeldung : **04.12.85 Patentblatt 85/49**

(45) Bekanntmachung des Hinweises auf die Patenterteilung : **02.11.89 Patentblatt 89/44**

(84) Benannte Vertragsstaaten : **DE**

(56) Entgegenhaltungen :
**EP–A– 0 037 477**
**EP–A– 0 040 770**
**EP–A– 0 056 583**
**DE–A– 2 655 048**
**DE–A– 3 011 709**
**FR–A– 2 498 474**
**Die Akte enthält technische Angaben, die nach dem Eingang der Anmeldung eingereicht wurden und die nicht in dieser Patentschrift enthalten sind.**

(73) Patentinhaber : **Schmidt, Joachim**
**Brandeckstrasse 1**
**D-7601 Ohlsbach (DE)**

**Unruh, Martin**
**Am Wachtbühl 44**
**D-7633 Seelbach (DE)**

(72) Erfinder : **Schmidt, Joachim**
**Brandeckstrasse 1**
**D-7601 Ohlsbach (DE)**
Erfinder : **Unruh, Martin**
**Am Wachtbühl 44**
**D-7633 Seelbach (DE)**

(74) Vertreter : **Henkel, Feiler, Hänzel & Partner**
**Möhlstrasse 37**
**D-8000 München 80 (DE)**

**EP 0 162 938 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Kunststoffe werden im wesentlichen nach drei verschiedenen Verfahren hergestellt, nämlich durch Polymerisation, Polykondensation und Polyaddition.

Bei der Polymerisation werden aus ungesättigten polymerisationsfähigen Verbindungen unter Aufspaltung der Doppelbindungen höher molekulare Polymerisate erhalten, in denen gleiche monomere Einheiten aneinandergereiht sind. Diese echte Polymerisation verläuft im allgemeinen exotherm ohne Abspaltung irgendwelcher niedrigmolekularer Produkte, wie Wasser, Alkohol, Kohlendioxid usw.

Bei der Polykondensation werden demgegenüber polyfunktionelle Moleküle unter Abspaltung niedrigmolekularer Produkte, wie Wasser, Alkohol, Kohlendioxid usw. miteinander verknüpft. Um hohe Molekulargewichte zu erhalten, sind oft hohe Temperaturen und Katalysatoren erforderlich. Es lassen sich beliebige Zwischenstufen abfangen, die erst später in den gewünschten Endzustand übergeführt werden können.

Bei der Polyaddition, dem sogenannten Diisocyanat-Polyadditionsverfahren, werden Diisocyanate mit Verbindungen umgesetzt, die zwei reaktionsfähige Wasserstoffatome aufweisen. Unter Verschiebung der Wasserstoffatome der Verbindung an die Stickstoffatome des Diisocyanats erfolgt dann die Addition der Verbindung an die Kohlenstoffatome der Diisocyanat-Gruppen.

Zur Herstellung von Mikrokapseln, welche eine ölige Flüssigkeit enthalten, ist es bekannt, das den Kapselinhalt bildende Material in einer hydrophilen Phase unter hoher Turbulenz zusammen mit einem freie Isocyanat-Gruppen enthaltenden Polymeren zu emulgieren und zur Kapselwandbildung das Polymere an der Grenzflächenphase durch Reaktion der freien Isocyanat-Gruppen mit einem in der hydrophilen Phase enthaltenen polyfunktionellen Härtungsmittel auszuhärten.

Zur Ausbildung der Mikrokapselwände werden, wie die Zusammenfassung auf Seiten 6/7 der DE-OS-3 011 709 zeigt, ausschließlich Polykondensate und Polyadditionsprodukte eingesetzt.

Nach der DE-AS-1 519 853 und der DE-PS-2 311 712 werden Polymere durch Polyaddition von Di- oder Polyolen an Di- oder Polyisocyanate hergestellt. Nach der DE-PS-2 617 747 werden Polymere erhalten, indem Polyisocyanate unter Einwirkung eines Katalysators und unter Abspaltung von Kohlendioxid durch kondensierende Polymerisation in durch Carbodiimid-Gruppen verknüpfte Polymere übergeführt werden. Nach der DE-PS-2 738 509 wird das Polymere durch Addition eines Mols Kohlendioxid an zwei Mole Diisocyanat unter Bildung von 2,4,6-Triketo-1,3,5-oxadiazin-diisocyanat erhalten. Auch ist es nach der DE-AS-1 519 853 bekannt, ein monomeres Polyisocyanat anstelle eines Polymeren für die Kapselwandbildung einzusetzen.

Die bekannte Verfahren weisen jedoch erhebliche Nachteile auf. So muß bei dem Verfahren nach der DE-PS-2 738 509 ein Druckautoklav für die Umsetzung mit dem $CO_2$-Gas eingesetzt werden. Weiterhin muß das gebildete 2,4,6-Triketo-1,3,5-oxadiazin-diisocyanat isoliert und durch aufwendige Dünnschichtverdampfung gereinigt werden, und zwar mit einem erheblichen Ausbeuteverlust.

Bei den Verfahren nach der DE-AS-1 519 853 sowie der DE-PS-2 311 712 führt das filmbildende Polymere zu einer Kapselwand, die nur ungenügend zerbrechlich ist, so daß ein daraus hergestellter Durchschreibepapiersatz nur wenige gute Kopien zuläßt. Bei dem Verfahren nach der DE-PS-2 617 747 ist zur Herstellung des polymeren Carbodiimids ein 15-stündiger, aufwendiger Prozeß erforderlich, der zudem zu einem Polymeren führt, dessen Kettenlänge nur schwierig zu steuern ist, so daß die daraus hergestellten Mikrokapseln eine zu geringe Drucksensibilität zeigen, d. h. bei Druckeinwirkung nur zum Teil entleert werden.

Weiterhin verlaufen die bekannten Verfahren endotherm, wobei zum Teil enorme Energiemengen zugeführt werden müssen.

Ein wichtiges Anwendungsgebiet derartiger Mikrokapseln bilden die chemischen Reaktionsdurchschreibepapiere, die seit einigen Jahren ihren festen Platz auf dem Markt gefunden haben. Sie weisen eine Geberschicht (CB = coated back) und eine Nehmerschicht (CF = coated front) auf. Zur Ausbildung eines Schriftbildes werden diese beiden Schichten unter Anwendung von Druck mittels eines Schreibwerkzeuges miteinander in Kontakt gebracht. Ein Schreibsatz besteht dabei in der Regel aus einem Erstblatt, einem oder mehreren Mittelblättern und einem Schlußblatt. Die CF-Schicht und die CB-Schicht können übereinander oder getrennt voneinander (Vorder- und Rückseite = CFB) auf einem Papiersubstrat angeordnet werden. Die CB-Schicht besteht dabei aus den erwähnten Mikrokapseln, die mit einer nur wenig verdunstenden Flüssigkeit gefüllt sind. die ihrerseits einen Farbstoffvorläufer bzw. -bildner gelöst enthält. Bei dem Farbstoffbildner handelt es sich dabei um einen farblosen Stoff, der erst in Kontakt mit z. B. sauren Bestandteilen sich zu einem Farbstoff entwickelt. Unter Anwendung von Druck mit dem Schreibwerkzeug wird die Kapselwand zerbrochen, so daß der Farbbildner in Kontakt mit der CF-Schicht gelangt, die saure Bestandteile, wie Phenolharze, Salicylate, Bleicherden, Attapulgit usw. enthält, so daß der Farbbildner zu einer farbigen Markierung entwickelt wird. Die Herstellung eines solchen chemischen Reaktionspapiers geschieht im allgemeinen in der Weise, daß die anfallenden wäßrigen Mikrokapseldispersionen auf ein bei der Papierherstellung aus wäßriger Phase beschichtetes CF-Papier aufgetragen werden.

Es ist bekannt, daß alle Isocyanat-Reaktionen von katalytischen Einflüssen außerordentlich abhängig sind. So wirken beispielsweise basische Verbindungen und Metallsalze reaktionsbeschleunigen (vgl.

« Bayer Kunststoffe Taschenbuch », Ausgabe 1955, Seite 34). Der Einfluß solcher Katalysatoren z. B. bei der Herstellung von Polyurethanen ist hinlänglich bekannt (vgl. DE-PS-2 311 712, Spalten 7 und 8). Nach dem « Bayer Kunststoffe Taschenbuch » katalysieren tertiäre Amine bei aliphatischen und hydroaromatischen Isocyanaten jedoch nur die unter Wasserstoffverschiebung verlaufenden Isocyanat-Reaktionen, also die Reaktion der Isocyanat-Gruppe mit OH- oder $NH_2$-Gruppen oder mit Wasser, nicht aber die Autopolymerisation. Hingegen sind aromatische Isocyanate unter solchen Bedingungen polymerisierbar d. h. die Isocyanatgruppen reagieren unter Ringbildung untereinander. So ist es z. B. möglich, Toluylendiisocyanat (TDI) durch Polymerisation in ein dimeres, trimeres oder höher molekulares Polyisocyanat überzuführen. Derartige polymere Isocyanate sind in den « Bayer Merkblättern » über Desmodur® TT, HL, IT und IT 1251 beschrieben. Desmodur® dient dabei zur Härtung von Desmophen®, einem polyhydroxylgruppenhaltigen Polyester, unter Bildung sogenannter DD-Lacke.

Aus der EP-A-40 770 ist die Herstellung von Mikrokapselsuspensionen für Reaktionsdurchschreibepapiere nach dem Grenzflächenpolyadditionsverfahren aus isocyanuratmodifizierten aliphatischen Polyisocyanaten und H-aktiven Verbindungen bekannt. Entsprechende Verfahren beschreiben die FR-A-2 498 474 und die EP-A-37 477. Gemeinsam ist diesen Verfahren, daß sie zur Kapselwandbildung isocyanuratmodifizierte Polyisocyanate einsetzen, bei denen es sich um flüssige, niedrigmolekulare Oligomere, insbesondere Trimere, handelt. Der Einsatz solcher oligomerer Polyisocyanate zur Kapselwandherstellung von Mikrokapseln für Reaktionsdurchschreibepapiere gewährleistet nicht, daß damit diffusionsfeste sowie druck- und wärmestabile Mikrokapseln erhalten werden können.

Aufgabe der Erfindung ist demgegenüber die Bereitstellung von Ausgangsmaterialien zur Herstellung von Mikrokapseln für Reaktionsdurchschreibepapiere, die unter Erhaltung der notwendigen Schreibdrucksensibilität druckstabile Kunststoffmikrokapseln mit wärmebeständigen und diffusionsdichten Kapselwänden liefern.

Es wurde nun gefunden, daß sich als Ausgangsmaterialien zur Herstellung von Mikrokapseln für chemische Reaktionsdurchschreibepapiere in hervorragender Weise freie Isocyanat- oder Isothiocyanat-Gruppen enthaltende Polymerisate eignen, die durch echte Polymerisation mindestens einer Verbindung mit wenigstens zwei Isocyanat- oder Isothiocyanat-Gruppen in Gegenwart eines basischen Katalysators hergestellt wurden und die mindestens eines der beiden folgenden Merkmale erfüllen :

a) das Molekulargewicht beträgt mindestens 3000,

b) das Polyiso(thio)cyanurat ist bei Raumtemperatur fest.

Bei den zur Herstellung der erfindungsgemäß verwendbaren Polyiso(thio)cyanurat (im folgenden als « Polymerisate » bezeichnet mit freien Isocyanat- oder Isothiocyanat-Gruppen einsetzbaren polymerisationsfähigen Verbindungen mit mindestens zwei Isocyanat- oder Isothiocyanat-Gruppen kann es sich um aliphatische, cycloaliphatische, hydroaromatische, aromatische oder heterocyclische Di- oder Polyisocyanate bzw. Di- und Polyisothiocyanate sowie um deren Substitutionsprodukte handeln. Aromatische Diisocyanate werden bevorzugt. Der Katalysator ist basisch oder muß einen basischen Charakter entwickeln können. Wie dem Fachmann bekannt ist, muß der basische Katalysator frei von aktiven Wasserstoffatomen sein, d. h. solchen Wasserstoffatomen, die durch Natrium substituierbar sind. Durch Verwendung von Gemischen von wenigstens zwei Isocyanat- oder Isothiocyanat-Gruppen enthaltenden verschieden polymerisationsfähigen Verbindungen können auch Mischpolymerisate hergestellt werden. Es ist als überraschend anzusehen, daß zur Bildung der erfindungsgemäß verwendbaren Polymerisate eine relativ große Menge des basischen Katalysators erforderlich ist, um die Autopolymerisation auszulösen und zu vollenden, häufig von 10 und mehr Gew.-%, bezogen auf die Isocyanat- oder Isothiocyanat-Gruppen enthaltende polymerisationsfähige Verbindung. Der zeitliche exotherme Ablauf der Polymerisation ist dabei zur Menge des basischen Katalysators direkt proportional.

Als basische Katalysatoren werden bevorzugt tertiären Stickstoff enthaltende, gesättigte Verbindungen verwendet, und zwar sowohl substituierte als auch nicht-substituierte aliphatische Verbindungen, die neben Sitckstoff noch andere Heteroatome, wie O, P, S, Ti, Si, enthalten, mono-, bi- oder polycyclische heterocyclische Verbindungen, substituierte mono-, bi- oder polycyclische heterocyclische Verbindungen sowie substituierte oder nicht-substituierte mono-, bi- oder polycyclische heterocyclische Verbindungen, die außer Stickstoff noch andere Heteroatome, wie O, S, Si, Ti, enthalten.

Die verwendeten Katalysatoren können den unterschiedlichsten chemischen Stoffgruppen angehören. Als Beispiele können genannt werden :

Tertiäre Phosphine, beispielsweise Trialkylphosphine, wie Trimethylphosphin, Triethylphosphin, Tributylphosphin ; Triarylphosphine, wie Triphenylphosphin und Dialkylbenzylphosphin.

Tertiäre Amino-Phosphine, beispielsweise Hexamethyltriaminophosphin.

Tertiäre Amine, beispielsweise Triethylamin, Tributylamin, N-Methylmorpholin, N-Ethylmorpholin, N-Fettalkylmorpholin sowie Bis-(dimethylamino)-methan :

(Siehe Formel Seite 4 f.)

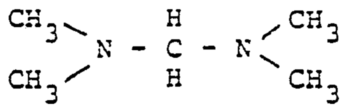

Bis-(dimethylamino)-ethan 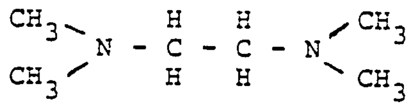

Bis-(dimethylamino)-propan 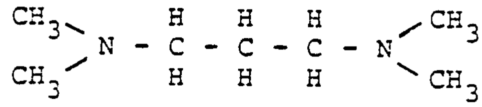

Bis-(dimethylamino)-butan 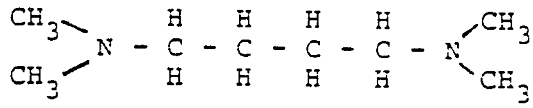

Bis-(dimethylamino)-hexan 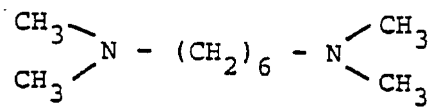

1,8-Bis-(dimethylamino)-naphthalin, (N,N,N',N'-Tetramethyl-1,8-naphthalindiamin), 1-Aza-4,6-dioxa-bicyclo-(3,3,0)-octan, 1,4-Diaza-bicyclo-(2,2,2)-octan, Hexamethylentetramin, N,N-Dimethylcyclohexylamin, N,N-Diethylcyclohexylamin und N,N-Dimethylpiperazin.

1,3,5-N-substituierte Hexahydro-Triazine, wie 1,3,5-Trimethylhexahydro-triazin, 1,3,5-Triethyl-hexahydrotriazin, 1,3,5-Tripropyl-hexahydro-triazin, 1,3,5-Triisopropyl-hexahydro-triazin, 1,3,5-Tributyl-hexahydrotriazin, 1,3,5-Trioctyl-hexahydro-triazin und 1,3,5-Tribenzyl-hexahydro-triazin.

N-substituierte, gesättigte Triazine, Tetrazine, Pentazine.

Tertiäre Fettamine, wie Genamin® (hergestellt von den Farbwerken Hoechst), Dimethylstearylamin, Dimethyldecylamin, Dimethyldodecylamin, Dimethyltetradecylamin, Dimethylhexadecylamin und Dimethyloctadecylamin.

Tertiäre Amine mit Heteroatomen, wie

N,N-Diethyltrimethylsilylamin 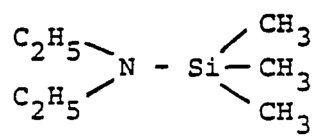

Tetrakis-(dimethylamino)-titan 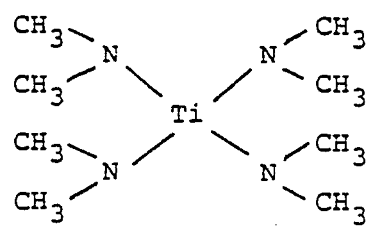

Quartäre Ammoniumsalze, die bei Erwärmung in tertiäre Amine übergehen, wie Hexadecylammoniumchlorid, Stearyldimethylammoniumchlorid und Distearyldimethylammoniumchlorid.

Anorganische und organische Metallverbindungen von Sn, Al, Zn, Co und Cu, insbesondere von Sn, wie Zinn(II)-acetat, Zin(II)-oleat, Zinn(II)-caproat, Zinn(II)-naphthoat, Dibutylzinndiacetat, Dibutylzinndilaurat und Dioctylzinndiacetat.

Beispiele für die erfindungsgemäß einsetzbaren mindestens zwei Isocyanat- oder Isothiocyanat-Gruppen enthaltenden Monomeren sind: Ethylendiisocyanat, Trimethylendiisocyanat, 1,4-Tetramethylendiisocyanat, 1,6-Hexamethylendiisocyanat, Ethylendiisothiocyanat, Tetramethylendiisothiocyanat, Hexamethylendiisothiocyanat, Cyclobutan-1,3-diisocyanat, Cyclohexan-1,3-diisocyanat, Cyclohexan-1,4-diisocyanat, 1,3-Phenylendiisocyanat, 1,4-Phenylendiisocyanat, Gemische von 1,3-Phenylendiisocyanat und 1,4-Phenylendiisocyanat, p-Phenylendiisothiocyanat, Xylylen-1,4-diisothiocyanat, 2,4-Toluytlendiisocyanat, 2,6-Tolyulendiisocyanat, Gemische von 2,4-Toluylendiisocyanat und 2,6-Toluylendiisocyanat, Xylylen-1,4-diisocyanat, Xylylen-1,3-diisocyanat sowie Gemische von Xylylen-1,4-diisocyanat und Xylylen-1,3-diisocyanat, 2,4-Hexahydrotoluylendiisocyanat, 2,6-Hexahydrotoluylendiisocyanat, Gemische von 2,4-Hexahydrotoluylendiisocyanat und 2,6-Hexahydrotoluylendiisocyanat, Hexahydro-1,3-phenylendiisocyanat, Hexahydro-1,4-phenylendiisocyanat, Gemische von Hexahydro-1,4-phenylendiisocyanat und Hexahydro-1,4-phenylendiisocyanat, 1,3-Diisocyanatobenzol, 1,3,5-Trimethylbenzol-2,4-diisocyanat, 1,3,5-Triisopropylbenzol-2,4-diisocyanat, Diphenylmethan-4,4'-diisocyanat, 3,3'-Dimethyldiphenylmethan-4,4'-diisocyanat, 4,4'-Diphenylpropandiisocyanat, Naphthylen-1,4-diisocyanat, Naphthylen-1,5-diisocyanat, Triphenylmethan-4,4',4''-triisocyanat, Toluylen-2,4,6-triisocyanat, Dimethyldiphenylmethan-2,2',5,5'-tetraisocyanat.

Neben von vorneherein als Monomere vorliegenden Isocyanat- oder Isothiocyanat-Gruppen enthaltenden polymerisationsfähigen Verbindungen können auch Verbindungen eingesetzt werden, aus denen bei Erwärmung mindestens zwei Isocyanat- oder Isothiocyanat-Gruppen enthaltende Monomere freigesetzt werden, beispielsweise bei etwa 150 °C aufspaltbare dimere Polycyanate, wie dimeres Toluylendiisocyanat (Desmodur TT®, Bayer Werke Leverkusen) gemäß folgendem Reaktionsschema

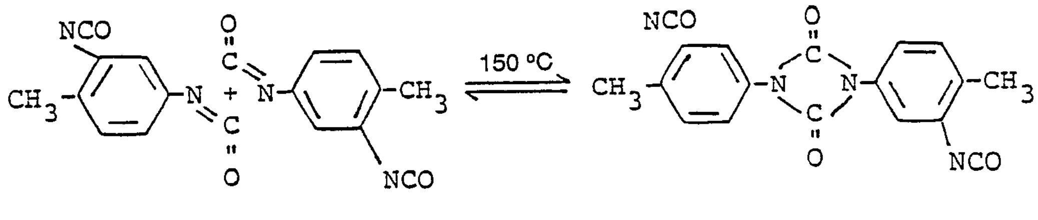


sowie beispielsweise bei höherer Temperatur rückspaltend verkappte Diisocyanate, wie Diphenylmethan-4,4'-diisocyanat-bis-Phenol-Addukt (Hylene MP® von Du Pont) nach folgendem Reaktionsschema

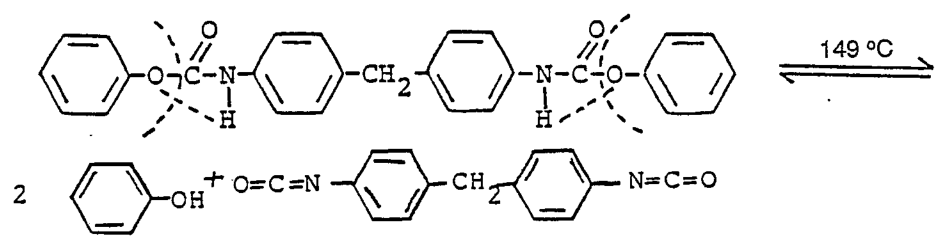


In der geschilderten Weise können flüssige oder feste, harte, spröde, gut lösliche, freie Isocyanat- oder Isothiocyanat-Gruppen aufweisende Polymerisate erhalten werden. Im Falle von aromatischen Di- oder Polyisocyanatausgangsmaterialien erfolgt die Bildung der erfindungsgemäß einsetzbaren Polymerisate ohne Zufuhr von äußerer Wärmeenergie exotherm, und zwar ohne Abspaltung irgendwelcher niedrigmolekularer Produkte und damit drucklos.

Der Bereich für den Katalysator reicht im allgemeinen von 1 bis 35 Gew.-%, vorzugsweise von 5 bis 20 Gew.-%, bezogen auf die polymerisationsfähige Verbindung. Bei träge ablaufender Polymerisation kann jedoch auch erwärmt oder der Katalysatorgehalt wesentlich erhöht werden. Auch ist es möglich, den Katalysatorgehalt zu senken, beispielsweise wenn gleichzeitig von außen Wärmeenergie zugeführt wird.

Es wurde weiterhin festgestellt, daß neben der chemischen Struktur die Basizität des Katalysators von auschlaggebender Bedeutung ist.

Zur Bestimmung der optimalen spezifischen Basizität wird vorteilhafterweise von solchen Verbindungen als Katalysator ausgegangen, die im homologen Bereich eng nebeneinanderliegen und zwischen stark basisch und schwach basisch eine gute Auswahl zulassen. Legt man z. B. die 1,3,5-Alkylhexahydrotriazine von 1,3,5-Trimethyl-1,3,5-trioctylhexahydrotriazin zugrunde, so nimmt in dieser Richtung die Basizität ab und die exotherme Polymerisation beispielsweise für Toluylendiisocyanat (TDI) zu, ohne daß äußere Wärme zugeführt werden muß.

So liefert 1,3,5-Trimethylhexahydrotriazin mit einem Gewichtsanteil von 10 Gew.-% an Katalysator, bezogen auf die polymerisationsfähige Verbindung, ein zähflüssiges klares Polymerisat innerhalb einer Stunde, während 1,3,5-Trioctylhexahydrotriazin unter den gleichen Bedingungen ein festes und höher molekulares Polymerisat bildet. Erhöht man den Anteil des 1,3,5-Trimethylhexahydrotriazins als Katalysator von 10 auf 20 Gew.-%, so erhält man ein höher molekulares klebriges festes Polymerisat.

Ein etwa gleiches höher molekulares Polymerisat wird auch dann erhalten, wenn man statt der Erhöhung der Katalysatormenge Wärmeenergie zuführt. So wird in diesem Fall beispielsweise auf 150 °C bis zur weiteren Viskositätszunahme erhitzt.

Es wurde auch festgestellt, daß es möglich ist, neben den reaktionsfähigen aromatischen Polyisocyanaten auch die träger reagierenden aliphatischen, cycloaliphatischen sowie hydroaromatischen Polyisocyanate und Polyisothiocyanate gegebenenfalls unter äußeras Wäsmezufuhs zu höher molekularen Polymerisaten zu polymerisieren, wobei tertiäre Aminophosphine sich als besonders vorteilhafte Katalysatoren erwiesen haben.

Die Polymerisation kann sowohl als Block- wie als Lösungsmittel-Polymerisation durchgeführt werden, und zwar mit einer Ausbeute von ca. 100 %. Bei der Lösungsmittel-Polymerisation wird

gegebenenfalls ein höherer Katalysatoranteil verwendet, wobei der Polymerisationsgrad des Polymerisats unter Umständen geringer ist als bei der Block-Polymerisation. Auch fallen die Polymerisate in Abhängigkeit von der polymerisationsfähigen Ausgangsverbindung mit sehr unterschiedlichem Polymerisationsgrad an. Das Molekulargewicht der erfindungsgemäß zu verwendenden Polymerisate beträgt vorzugsweise mindestens 3000, insbesondere 3000-5000.

Die Polymerisation läuft unter Bildung von noch freie Iso(thio)cyanatgruppen aufweisenden Verbindungen mit Isocyanurat- bzw. Isothiocyanurat-Ringen ab, die ihrerseits unter Anpolymerisation von zwei monomeren Diisocyanat- bzw. Diisothiocyanat-Molekülen den nächsten Isocyanurat- bzw. Isothiocyanurat-Ring mit höherem Molekulargewicht ausbilden. Da die weitere Ausbildung der Isocyanurat- bzw. Isothiocyanurat-Ringe räumlich verschieden möglich ist und vom jeweiligen Katalysator und dessen Menge abhängig ist, bilden sich Polymerisate mit unterschiedlichem chemischen Verhalten, wie Löseeigenschaften usw., aus.

Bei dem erfindungsgemäßen Verfahren zur Herstellung von Mikrokapseln werden die in der geschilderten Weise hergestellten mindestens zwei Isocyanat- oder Isothiocyanat-Gruppen enthaltenden Polymerisate in einem inerten Lösungsmittel oder Lösungsmittelgemisch gelöst, wobei ein Farbstoffvorläufer bzw. -bildner zugesetzt werden kann. Die so gebildete organische hydrophobe, ölige Phase wird sodann mit einer wäßrigen oder hydrophilen Phase vermischt, die neben Emulgierhilfen und/oder Schutzkolloiden, wie Polyvinylalkohol, Carboxymethylcellulose oder Polyvinylpyrrolidon, ein bifunktionelles Härtungsmittel entweder gelöst oder dispergiert enthält.

Die Vermichung der öligen Phase mit der hydrophilen Phase erfolgt unter hoher Turbulenz, wobei die Größe der Turbulenz den Durchmesser der erhaltenen Mikrokapseln bestimmt. Die Herstellung der Mikrokapseln kann dabei kontinuierlich oder diskontinuierlich erfolgen. Mit steigender Viskosität der wäßrigen Phase oder mit fallender Viskosität der öligen Phase nimmt in der Regel die Größe der Kapseln ab.

Das erfindungsgemäße Verfahren zur Herstellung der Mikrokapseln-Dispersion kann nach der « Inline »-Technik erfolgen. Dabei werden mittels einer Zwangsdosierpumpe die Öl-Phase und die wäßrige Phase zunächst getrennt einer Emulgierturbine zugeführt und kurz vor dem Einlauf in die Emulgierturbine z. B. im Verhältnis von 2 : 3, also 40 Gew.-% Öl-Phase und 60 Gew.-% wäßrige Phase, vereinigt, bei einem Durchlaufvolumen von 1 200 bis 1 500 l/h.

Der Anteil der Kunststoffkapseln in der Kunststoffkapsel-Dispersion beträgt dabei etwa 35-40 Gew.-%.

Zur Ausbildung einer festen Kapselwand wird die Kunststoffkapsel-Dispersion einer chemischen Härtung unterzogen, wobei die Mikrokapsel-Dispersion vorzugsweise mindestens 30 min erwärmt wird, vorzugsweise auf 70-80 °C. Nach Abkühlung auf Raumtemperatur kann die Kapseldispersion dann verwendet werden.

Die nach dem erfindungsgemäßen Verfahren erhaltenen Mikrokapsel-Dispersionen sind auch zur Herstellung von Zwei-Schichtenpapieren (self-contained papers) geeignet, bei denen die Farbstoffvorläufer bzw. -bildner in den Mikrokapseln und der zur Farbbildung benötigte Elektronenakzeptor in einer darüber angeordneten Schicht oder als Gemisch mit den Mikrokapseln auf der papieroberfläche aufgebracht ist. Die erfindungsgemäß hergestellte Kapsel-Dispersion ist im Gegensatz zu den bekannten Kapsel-Dispersionen unbegrenzt lagerungsfähig.

Aufgrund der sehr hohen Reaktivität der erfindungsgemäß zu verwendenden Polymerisate ist ein sehr großes Verhältnis Polymerisat zu dem den Kapselinhalt bildenden öligen Material von bis zu 1 : 12 Gew.-Teilen bei immer noch diffusionsdichter Kapselwandausbildung möglich.

Zum Auflösen des Polymerisats bzw. als Kapselinhalt werden neben Pflanzenölen Erdölfraktionen bevorzugt verwendet, insbesondere Alkylbenzo-Derivate, chlorierte Diphenyle, ethylierte Mono-, Di- oder Tridiphenyle, Monoisopropyldiphenyl, Verbindungen vom Diarylethan-Typ, Alkylnaphthaline, Benzoesäureester, wie Benzoesäureethylester oder Benzoesäureoctylester, Phthalsäureester, wie Dibutylphthalat, chlorierte Paraffine, Kerosin und Mischungen davon.

Als Farbstoffvorläufer bzw. -bildner werden vorzugsweise säureaktivierbare Farbstoffbildner eingesetzt, die auch als Leukobasen bezeichnet werden und farblose, basische Produkte darstellen. Bevorzugte Farbstoffbildner sind Kristallviolettlacton, 3,3-Bis-(para-dimethylaminophenyl), 6-Dimethylaminophthalid und Benzoylleukomethylenblau.

Die Härtung, d. h. die Ausbildung einer festen Kapselwand erfolgt durch Polyreaktion der freien Isocyanat- oder Isothiocyanat-Gruppen des Polymerisats and der organischen Grenflächenphase der Dispersion bzw. Emulsion mit dem in der hydrophilen Phase vorhandenen Härtungsmittel. Als Härtungsmittel werden vorzugsweise Wasser, aliphatische, cycloaliphatische oder aromatische Di- und Polyhydroxy-Verbindungen, aliphatische, cycloaliphatische oder aromatische Di- oder Polyaminhydroxy-Verbindungen oder aliphatische, cycloaliphatische oder aromatische Di- oder Polyamine verwendet, beispielsweise Propan-1,3-diol, Cyclohexandiole, 1,4-Diaminocyclohexan, N-Methyldiethanolamin, N,N'-Bis-(2-aminoethyl)-ethylendiamin, N-Ethyldiethanolamin, Hexantriol-(1,2,6), Butantriol-(1,2,4), Trimethylolpropan, Trimethylolethan, Pentaerythrit, Hydrazin und Derivate, Hydrazinoethanol-(2), Ethylendiamin-(1,2), Diethylentriamin, Triethylentetramin, Tetraethylenpentamin, 2,4- bzw. 2,6-Diaminotoluol, 1,4-Diaminobenzol, 1,4-Diaminocyclohexa, 4,4'-Diaminodiphenylmethan, 1,4-Diaminobutan, 1,6-Diamino-n-hexan, N-Hydroxyethylethylendiamin.

Als wenigstens zwei Isocyanat- bzw. Isothiocyanat-Gruppen aufweisende polymerisationsfähige Verbindungen werden vorzugsweise großtechnisch hergestellte Di- und Polyisocyanate bevorzugt, beispielsweise

TDI : Toluylendiisocyanat (Isomerengemisch von 2,4- und 2,6-Toluylendiisocyanat im Verhältnis von 80:20).
HDI : Hexamethylendiisocyanat-(1,6).
IPDI : Isophorondiisocyanat.
DMDI : Diphenylmethan-4,4'-diisocyanat.

Die nachstehenden Beispiele dienen der weiteren Erläuterung der Erfindung. Die Beispiele 1 bis 10 betreffen dabei die Herstellung der Polymerisate, während sich die Beispiele 11 und 12 auf die Herstellung des den Kapselinhalt bildenden öligen Materials bzw. auf die Herstellung einer Mikrokapsel-Dispersion beziehen.

Beispiele 1 und 2

Zur Herstellung eines Polymerisats durch Block-Polymerisation wurden jeweils 200 g monomeres Polyisocyanat in einen verschließbaren 500 ml fassenden Erlenmeyer-Stehkolben eingebracht. Es wurde die jeweilige Katalysatormenge unter langsamer Rührung zugegeben und der Kolben wurde locker verschlossen. Der Rührer wurde in der letzten Phase der Reaktion nach Ausbildung einer hohen Viskosität abgeschaltet.

Beispiel 1

Es werden 200 g TDI als monomeres Polyisocyanat und 20 g 1,3,5-Tributylhexahydrotriazin (10 Gew-%) als Katalysator verwendet. Nach ca. 45-60 min hat sich unter ständiger Zunahme der Eigentemperatur bis auf ca. 100 °C ein gelblich gefärbtes klares hochviskoses Polymerisat gebildet, das nach Abkühlung auf Raumtemperatur fest, spröde sowie gut löslich ist.

Beispiel 2

Es werden 200 g TDI als monomeres Polyisocyanat und 20 g 1-Aza-4,6-dioxabicyclo-(3,3,0)-octan (10 Gew.-%) als Katalysator verwendet. Nach etwa 30-45 min hat sich unter ständiger Zunahme der Eigentemperatur bis auf ca. 130 °C ein zähviskoses klares Polymerisat gebildet, das nach Abkühlung auf Raumtemperatur sehr fest und unlöslich ist. Infolge der unlöslichkeit des Polymerisats ist eine Molekulargewichtsbestimmung nicht möglich.

Beispiel 3

Zur Herstellung des Polymerisats werden in einem verschließbaren 350 ml fassenden Erlenmeyer-Kolben 50 g TDI und 50 g Benzoesäureester gemischt. Es wurden 7,5 g 1,3,5-Trioctylhexahydrotriazin (15 Gew.-%) als Katalysator unter langsamem Rühren zugegeben und der Kolben locker verschlossen. Nach ca 1-4 h hat sich unter Gelbfärbung und exothermer Erwärmung bis ca. 50 °C eine hochviskose Lösung des Polymerisats gebildet. Die Reaktions- und Viskositätszunahme ist nach 4 h noch nicht abgeschlossen. Für die weitere Verarbeitung wurden weitere 125 g Benzoesäureester zugesetzt.

Beispiel 4

Es wurde wie bei den Beispielen 1 und 2 block-polymerisiert, jedoch mit einem Wärmeimpuls gearbeitet. Es wurden 200 g HDI als monomeres Polyisocyanat und 30 g Hexamethyltriaminophosphin (15 Gew.-%) als Katalysator verwendet. Die katalysierte HDI-Lösung erhält einen Wärmeimpuls, d. h. es wird kurzzeitig auf ca. 150-1?0oC erwärmt, damit die Polymerisationsreaktion anspringt. Danach läuft die Polymerisation ohne weitere Wärmezufuhr ab und führt unter ständiger Viskositätszunahme nach ca. 8 h zu einem gelbrötlich gefärbten klaren zähflüssigen löslichen Polymerisat und nach ca 9 h zu einem gelbrötlich gefärbten klaren gummiartigen unlöslichen Polymerisat. Es sei bemerkt, daß die Polymerisationszeit zu einem unlöslichen gummiartigen Polymerisat durch einen verlängerten Wärmeimpuls sehr wirksam, beispielsweise bis auf 3 h, verkürzt werden kann. Infolge der Unlöslichkeit des erhaltenen Polymerisats ist eine Molekulargewichtsbestimmung nicht möglich.

Beispiele 5 bis 10

Zur Herstellung eines Polymerisats durch Block-Polymerisation werden das monomere Polyisocyanat sowie der Katalysator unter leichtem Rühren in einem 500 ml fassenden Rundkolben mit Aufsatz im Ölbad erwärmt.

Beispiel 5

Es werden 200 g TDI als monomeres Polyisocyanat und 20 g Dimethylhexadecylamin (Genamin® 16 R 302 D) (10 Gew.-%) als Katalysator verwendet. Es wird auf ca. 160-170 °C Innentemperatur aufgeheizt. Bei ca. 140 °C Innentemperatur tritt eine leichte Gelbfärbung auf, d?e min Heizdauer bei 160-170 °C in eine goldgelbe Färbung übergeht. Nach dieser Heizdauer ist die Lösung mittelviskos. Die Heizung wird unterbrochen und die Lösung zur Abkühlung auf Raumtemperatur sich selbst überlassen. Das gebildete Polymerisat ist zähflüssig. Nach 24 h Standzeit erfolgt ein Wärmeimpuls auf 170 °C, danach war das Polymerisat nach Abkühlung auf Raumtemperatur sehr hart, fest sowie gut löslich.

Beispiel 6

Es wurde wie nach dem Beispiel 5 verfahren, jedoch anstelle des tertiären Fettamins, Dimethylhexadecylamin, das quartäre Fettaminsalz Distearyldimethylammoniumchlorid (Dodigen® DSAC) verwendet. Es wurde gleichfalls ein hartes, festes, gut lösliches, bräunlich gefärbtes, trübes Polymerisat erhalten.

Beispiel 7

Es wurden 200 g TDI-Dimeres (Desmodur® TT) zur Bildung des monomeren Polyisocyanats und 20 g Hexamethylentetramin (10 Gew.-%) als Katalysator verwendet. Es wurde auf 150-180 °C erhitzt, um das feste Dimere in das flüssige Monomere überzuführen. Nach etwa 2-3 h Heizzeit bei dieser Temperatur und anschließender Kühlung auf Raumtemperatur hat sich ein gelb bis rötlich gefärbtes, festes sprödes lösliches Polymerisat gebildet. Zur weiteren Verarbeitung kann das Polymerisat direkt gelöst werden. Einfacher ist es jedoch, das kalte Lösungsmittel unmittelbar nach Ende der Heizzeit bei 160-170 °C der viskosen Polymerisation zuzugeben.

Beispiel 8

Es wurde wie beim Beispiel 7 verfahren, jedoch anstelle des TDI-Dimeren TDI-Monomeres eingesetzt. Es wird ein analoges, gelb bis rötlich gefärbtes, festes, sprödes, lösliches Polymerisat erhalten.

Beispiel 9

200 g DMDI und 30 g N,N,N',N'-Tetramethylethylendiamin (15 Gew.-%) wurden ca 1-2 h bei 130-140 °C Innentemperatur erhitzt. Die Viskosität der Lösung nahm dabei ständing zu. Nach Abkühlung auf Raumtemperatur wurde ein lösliches, klares, plastisch festes Polymerisat erhalten.

Beispiel 10

Es wurde wie beim Beispiel 9 verfahren, jedoch wurden anstelle von 15 Gew.-% N,N,N',N'-Tetramethylethylendiamin 15 Gew.-% 1-Aza-4,6-dioxabicyclo-(3,3,0)-octan als Katalysator verwendet. Es wurde ein äußerst hartes, festes, nicht sprödes, unlösliches Polymerisat bereits bei einer Temperatur von 130-140 °C erhalten.

Beispiel 11

Die in der geschilderten Weise hergestellten Polymerisate werden zur weiteren Verwendung in einem nicht-flüchtigen, inerten Lösungsmittel gelöst und mit einer öligen Flüssigkeit, die einen Farbstoffbildner enthält, im Gewichts-Verhältnis 1 : 6 vorzugsweise 1 : 8 bis 1 : 12 verdünnt.

| | 1:8 | 1:10 | 1:12 |
|---|---|---|---|
| Polymerisat | 11,0 g | 9,0 g | 7,7 g |
| Lösungsmittel für das Polymerisat | 39,0 g | 41,0 g | 42,3 g |
| Ölige Flüssigkeit (Kapselinhalt) | 50,0 g<br>100,0 g | 50,0 g<br>100,0 g | 50,0 g<br>100,0 g |

Als Lösungsmittel für das Polymerisat wird dabei vorzugsweise ein Benzoesäureester verwendet, die ölige Flüssigkeit besteht beispielsweise aus Alkylnaphthalinen, die ca. 6 Gew.-%-12 Gew.-% Farbstoffbildner enthalten.

Hervorzuheben ist, daß die gute Löslichkeit des Polymerisats einerseits und dessen hohe Reaktivität

andererseits durch das Verdünnungsverhältnis von 1 : 8 bis 1 : 12 die Einstellung einer idealen Kapselwandstärke bei der Härtung mit ihren spezifisch geforderten Eigenschaften zuläßt. Die nach den Beispielen 1 bis 22 erhaltenen Polymerisate lassen sich, soweit sie löslich sind, nach diesem Beispiel in die Ölphase und damit in die Mikrokapsel-Dispersion überführen.

Beispiel 12

100 g der nach dem Beispiel 11 zubereiteten öligen Flüssigkeit mit dem Polymerisat, beispielsweise einem nach den Beispielen 1, 3, 4, 5, 6, 7, 8 oder 9 hergestellten Polymerisat, werden schnell in ein 500 ml fassendes Becherglas gegeben, das 150 ml einer 3 %igen Polyvinylalkohollösung als Emulgator und Schutzkolloid enthält. Mit einem Ultra-Turrax-Schnellrührer wird sodann 1-2 min bei 8 000 Umdrehungen/min unter Eiskühlung emulgiert wobei die Öltröpfchen eine mittlere Teilchengröße von 1 bis 10 µm erhalten. Die erhaltene Emulsion wird sodann in ein zweites 1 000 ml fassendes Becherglas umgefüllt, das eine ca. 1,5 %ige wäßrige Lösung eines Polyamins, beispielsweise Diethylentriamin, oder einer Polyhydroxyl-Verbindung, beispielsweise Trimethylolpropan, enthält, und zwar rasch und unter gutem Rühren mit einem stufenlos regelbaren Propellerrührer, wobei die Lösung dann auf ca. 70-80 °C erwärmt und für ca. 30-60 min bei dieser Temperatur zur festen Kapselwandbildung bzw. -härtung gehalten wird. Die erhaltene Kapsel-Dispersion besitzt einen Kapselanteil von ca. 30 bis 35 % und dient dem Aufstrich auf einen flächigen, insbesondere saugfähigen Träger, beispielsweise Papier. Es sei erwähnt, daß es keine Schwierigkeiten bereitet, auch höhere Kapselkonzentrationen von beispielsweise 50 % herzustellen.

Um aus dem nach dem Beispiel 2 hergestellten Polymerisat, das bei der zugesetzten Katalysatormenge von 10 Gew.-% 1-Aza-4,6-dioxabicyclo-(3,3,0)-octan einen unlöslichen Körper bildet, eine ölige Phase bilden zu können, gibt man das Lösungsmittel zu, kurz bevor die feste und unlösliche Phase eintritt, oder man arbeitet von vorneherein mit einem niedrigeren Anteil an Katalysatormasse, mit 5 Gew.-% 1-Aza-6,6-dioxabicyclo-(3,3,0)-octan.

In der hydrophoben Flüssigkeit oder Öl-Phase können neben dem Polymerisat auch andere Stoffe gelöst oder dispergiert sein, und zwar auch Stoffe, die nicht der Herstellung von chemischen Reaktionspapieren dienen.

**Patentansprüche**

1. Verwendung von freie Isocyanat- oder Isothiocyanat-Gruppen enthaltenden Polyiso(thio)cyanuraten, die durch echte Polymerisation mindestens einer Verbindung mit wenigstens zwei Isocyanat- oder Isothiocyanat-Gruppen in Gegenwart eines basischen Katalysators hergestellt wurden und die mindestens eines der beiden folgenden Merkmale erfüllen
   a) das Molekulargewicht beträgt mindestens 3000,
   b) das Polyiso(thio)cyanurat ist bei Raumtemperatur fest,

zur Herstellung von Mikrokapseln für chemische Reaktionsdurchschreibepapiere.

2. Verwendung von Polymerisaten nach Anspruch 1, die in Gegenwart von 1-35 Gew.-% Katalysator (bezogen auf die polymerisationsfähige Verbindung) hergestellt wurden.

3. Verwendung von Polymerisaten nach Ansprüchen 1 und 2, die in Gegenwart von 5-20 Gew.-% Katalysator (bezogen auf die polymerisationsfähige Verbindung) hergestellt wurden.

4. Verwendung von Polymerisaten nach einem der Ansprüche 1 bis 3, die in Gegenwart eines gesättigten basischen Katalysators hergestellt wurden.

5. Verwendung von Polymerisaten nach einem der vorhergehenden Ansprüche, die in Gegenwart eines aus einer ein tertiäres Stickstoffatom enthaltenden Verbindung, einem tertiären Phosphin, einem tertiären Aminophosphin, einem quaternären Ammoniumsalz oder einer anorganischen oder organischen Verbindung von Sn, Al, Zn, Co oder Cu bestehenden Katalysators hergestellt wurden.

6. Verwendung von Polymerisaten nach Anspruch 1, die durch echte Polymerisation mindestens eines aromatischen Di- oder Polyisocyanats bzw. Di-oder Polyisothiocyanats in Gegenwart eines basischen Katalysators ohne äußere Wärmezufuhr hergestellt wurden.

7. Verwendung von Polymerisaten nach Anspruch 1, die durch echte Polymerisation mindestens eines aliphatischen, cycloaliphatischen oder hydroaromatischen Di- oder Polyisocyanats bzw. Di- oder Polyisothiocyanats in Gegenwart eines tertiären Aminphosphinkatalysators hergestellt wurden.

8. Verwendung von Polymerisaten nach Anspruch 7, die durch echte Polymerisation mindestens eines aliphatischen, cycloaliphatischen oder hydroaromatischen Di- oder Polyisocyanats bzw. Di- oder Polyisothiocyanats in Gegenwart eines tertiären Aminphosphinkatalysators unter äußerer Wärmezufuhr hergestellt wurden.

9. Verwendung von Polymerisaten nach einem der vorhergehenden Ansprüche, die durch Block- oder Lösungsmitelpolymerisation hergestellt wurden.

10. Verfahren zur Herstellung von Mikrokapseln für chemische Reaktionsdurchschreibepapiere unter Verwendung von Polyiso(thio)cyanuraten gemäß einem der Ansprüche 1 bis 9, dadurch gekennzeichnet, daß eine Ölige Flüssigkeit mit einem Gehalt an mindestens einem der betreffenden Polymerisate

unter hoher Turbulenz in einer hydrophilen Phase emulgiert und das Polymerisat zur Kapselwandbildung an der Grenzflächenphase durch Reaktion der freien Isocyanat- oder Isothiocyanat-Gruppen mit einem mindestens bifunktionellen, in der hydrophilne Phase enthaltenen Härtungsmittel durch mindestens 30-minütiges Erwärmen auf vorzugsweise 70-80 °C ausgehärtet wird.

11. Verfahren nach Anspruch 10, dadurch gekennzeichnet, daß, bezogen auf 1 Gew.-Teil Polymerisat, mindestens 6, vorzugsweise 8-12 Gew.-Teile ölige Flüssigkeit eingesetzt werden.

12. Verfahren nach einem der Ansprüche 10 oder 11, dadurch gekennzeichnet, daß die Emulgierung der öligen Flüssigkeit zusammen mit dem Polymerisat in der hydrophilen Phase bis zu einer mittleren Teilchengröße der Öltröpfchen von 1-10 um durchgeführt wird.

13. Verfahren nach einem der Ansprüche 10 bis 12, dadurch gekennzeichnet, daß der öligen Flüssigkeit ein Farbstoffvorläufer bzw. -bildner zugesetzt wird.

## Claims

1. The use of polyiso(thio)cyanurates containing free isocyanate or isothiocyanate groups, which have been prepared by true polymerization of at least one compound having at least two isocyanate or isothiocyanate groups in the presence of a basic catalyst, and which satisfy at least one of the two features below :

a) the molecular weight is at least 3 000 ;

b) the polyiso(thio)cyanurate is solid at room temperature ; for the production of microcapsules for chemical reaction copy papers.

2. The use of polymers according to claim 1, which have been prepared in the presence of from 1 to 35 percent by weight of catalyst (based on the polymerizable compound).

3. The use of polymers according to claims 1 and 2, which have been prepared in the presence of from 5 to 20 percent by weight of catalyst (based on the polymerizable compound).

4. The use of polymers according to any one of claims 1 to 3, which have been prepared in the presence of a saturated basic catalyst.

5. The use of polymers according to any one of the preceding claims, which have been prepared in the presence of a catalyst comprising a compound containing a tertiary nitrogen atom, a tertiary phosphine, a tertiary aminophosphine, a quaternary ammonium salt or an inorganic or organic compound of Sn, Al, Zn, Co or Cu.

6. The use of polymers according to claim 1, which have been prepared by true polymerization of at least one aromatic di- or polyisocyanate, or di- or polyisothiocyanate, respectively, in the presence of a basic catalyst and without external heating.

7. The use of polymers according to claim 1, which have been prepared by true polymerization of at least one aliphatic, cycloaliphatic or hydroaromatic di- or polyisocyanate, or di- or polyisothiocyanate, respectively, in the presence of a tertiary aminophosphine catalyst.

8. The use of polymers according to claim 7, which have been prepared by true polymerization of at least one aliphatic, cycloaliphatic or hydroaromatic di- or polyisocyanate, or di- or polyisothiocyanate, respectively, in the presence of a tertiary aminophosphine catalyst with external heating.

9. The use of polymers according to any one of the preceding claims, which have been prepared by block or solvent polymerization.

10. A method of producing micro capsules for chemical reaction copy papers with the use of polyiso(thio)cyanurates according to any one of claims 1 to 9, characterized in that an oily liquid containing at least one of the respective polymers is emulsified under high turbulence in a hydrophilic phase, and the polymer is cured, for capsule wall formation at the interface phase, by reacting the free isocyanate or isothiocyanate groups with at least one bifunctional hardening agent contained in the hydrophilic phase, by heating to preferably from 70 to 80 °C for at least 30 minutes.

11. The method according to claim 10, characterized by using, based on 1 part by weight of polymer, at least 6, preferably from 8 to 12 parts by weight of the oily liquid.

12. The method according to one of claims 10 and 11, characterized by carrying out the emulsification of the oily liquid in combination with the polymer in the hydrophilic phase until an average particle size of the oil droplets of from 1 to 10 μm is obtained.

13. The method according to any one of claims 10 to 12, characterized by adding to the oily liquid a dye precursor or dye forming agent.

## Revendications

1. Utilisation de polyiso(thio)cyanurates contenant des groupes isocyanate ou isothiocyanate libres, qui ont été préparés par polymérisation véritable d'au moins un composé ayant au moins deux groupes isocyanate ou isothiocyanate en présence d'un catalyseur basique, et qui satisfont à au moins une des deux caractéristiques suivantes :

a) la masse moléculaire est d'au moins 3 000 ;

b) le polyiso(thio)cyanurate est solide à la température ambiante ;

pour la préparation de microcapsules pour des papiers autocopiants chimiques à réaction.

2. Utilisation de polymères suivant la revendication 1, qui ont été préparés en présence de 1 à 35 % en poids de catalyseur (par rapport au composé polymérisable).

3. Utilisation de polymères suivant les revendications 1 et 2, qui ont été préparés en présence de 5 à 20 % en poids de catalyseur (par rapport au composé polymérisable).

4. Utilisation de polymères suivant l'une des revendications 1 à 3, qui ont été préparés en présence d'un catalyseur basique saturé.

5. Utilisation de polymères suivant l'une des revendications précédentes, qui ont été préparés en présence d'un composé contenant un atome d'azote tertiaire, d'un catalyseur constituée d'une phosphine tertiaire, d'une amino phosphine tertiaire, d'un sel d'ammonium quaternaire ou d'un composé minéral ou organique de Sn, Al, Zn, Co ou Cu.

6. Utilisation de polymères suivant la revendication 1, qui ont été préparés par polymérisation véritable d'au moins un di- ou polyisocyanate ou d'un di- ou polyisothiocyanate aromatique en présence d'un catalyseur basique, sans apport de chaleur externe.

7. Utilisation de polymères suivant la revendication 1, qui ont été préparés par polymérisation véritable d'au moins un di- ou polyisocyanate ou d'un di- ou polyisothiocyanate aliphatique, cycloaliphatique ou hydroaromatique en présence d'un catalyseur d'amino phosphine tertiaire.

8. Utilisation de polymères suivant la revendication 7, qui ont été préparés par polymérisation véritable d'au moins un di- ou polyisocyanate ou d'un di- ou polyisothiocyanate aliphatique, cycloaliphatique ou hydroaromatique en présence d'un catalyseur d'amino phosphine avec apport extérieur de chaleur.

9. Utilisation de polymères suivant l'une des revendications précédentes, qui ont été préparés par polymérisation en masse ou en solvant.

10. Procédé de préparation de microcapsules pour des papiers autocopiants chimiques à réaction avec utilisation de polyiso(thio)cyanurates suivant l'une des revendications 1 à 9, caractérisé en ce qu'on émulsionne sous une forte turbulence, dans une phase hydrophile, un liquide huileux contenant au moins un des polymères en question, et en ce qu'on durcit le polymère pour la formation des parois des capsules à la phase interfaciale par réaction des groupes isocyanate ou isothiocyanate libres avec au moins un durcisseur bifonctionnel, contenu dans la phase hydrophile, par un chauffage d'au moins trente minutes, de préférence à 70-80 °C.

11. Procédé suivant la revendication 10, caractérisé en ce qu'on utilise pour 1 partie en poids de polymère au moins 6, de préférence 8 à 12 parties en poids de liquide huileux.

12. Procédé suivant l'une des revendications 10 ou 11, caractérisé en ce que l'émulsification du liquide huileux en même temps que le polymère présent dans la phase hydrophile est effectuée jusqu'à une taille moyenne de particules des gouttes d'huile de 1 à 10 µm.

13. Procédé suivant l'une des revendications 10 à 12, caractérisé en ce qu'on ajoute au liquide huileux un composé précurseur ou générateur de colorant.